(19)

Europäisches
Patentamt
European
Patent Office
Office européen
des brevets

(11) **EP 2 629 537 A2**

(12) **EUROPEAN PATENT APPLICATION**

(43) Date of publication:
**21.08.2013 Bulletin 2013/34**

(51) Int Cl.:
*H04N 13/04* (2006.01)　　*H04N 13/00* (2006.01)

(21) Application number: **13155404.0**

(22) Date of filing: **15.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.02.2012　KR 20120016162**

(71) Applicant: **Samsung Electronics Co., Ltd
Gyeonggi-do 443-742 (KR)**

(72) Inventors:
　• **Yun, Sang-un
　　Gyeonggi-do (KR)**

　• **Kim, Hyung-rae
　　Seoul (KR)**
　• **Park, Jae-sung
　　Seoul (KR)**
　• **Sung, Jun-ho
　　Seoul (KR)**
　• **Cho, Bong-hwan
　　Gyeonggi-do (KR)**
　• **Hwang, Min-cheol
　　Seoul (KR)**

(74) Representative: **Taor, Simon Edward William et al
Venner Shipley LLP
200 Aldersgate
London EC1A 4HD (GB)**

(54) **Display apparatus and method for adjusting three-dimensional effects**

(57)　　A display apparatus and a method for adjusting a 3D effect of the display apparatus are disclosed. The display apparatus includes: a display unit; a receiver which receives a three-dimensional (3D) video signal including a left-eye video signal and a right-eye video signal; a disparity information calculator which calculates disparity information; a depth information calculator which calculates first depth information of the 3D video signal and photographing information of a 3D image photographing device; a 3D image converter which generates a first depth map and displays the first depth map; and a user interface (UI) generator which generates and displays a menu button for adjusting the first depth information, the 3D image converter generating a second depth map in response to a user's selection input through the menu button, and displaying the second depth.

FIG. 1

EP 2 629 537 A2

## Description

Apparatuses and methods consistent with the exemplary embodiments relate to a display apparatus and a method for adjusting a three-dimensional (3D) effect of the display apparatus. More particularly, the exemplary embodiments relate to a display apparatus capable of adjusting a 3D effect of a 3D image in accordance with production intention, and a method of adjusting the 3D effect.

A stereoscopic image (or a 3D image) is photographed using two or more cameras or a stereo camera. Such a photographed 3D image gets a horizontal disparity which corresponds to positions and depth of an object. The horizontal disparity becomes a factor in determining a level of a 3D effect when a stereoscopic image is displayed. Therefore, a correct expression of the disparity between objects of the 3D image is needed in order to determine the level of the 3D effect.

The 3D image includes a left-eye image for a user's left eye and a right-eye image for a user's right eye. A user recognizes a 3D effect based on binocular parallax when alternately viewing the left-eye image and the right-eye image. Consequently, the disparity between the objects contained in the left-eye image and the right-eye image causes a user to recognize different 3D effects. Accordingly, control of a disparity value of an object when making a 3D image is a factor in expressing the 3D effect.

When an image is taken through a camera, it is difficult to control the disparities of all objects due to problems relating to image distortion, and the like. Also, the disparity value is changed by various artifacts such as distortion of a 3D video signal, X-talk, etc., while the display apparatus performs video processing such as scaling, or the like, with regard to the received 3D image. Therefore the problem exists that a 3D effect actually intended by a producer is not properly expressed.

One or more exemplary embodiments may provide a display apparatus capable of ascertaining whether a 3D effect intended by a producer is expressed, adjusting the 3D effect, and a method of adjusting the 3D effect.

According to an aspect of an exemplary embodiment, there is provided a display apparatus including: a display unit; a receiver which receives a three-dimensional (3D) video signal including a left-eye video signal and a right-eye video signal; a disparity information calculator which calculates disparity information showing the differences in a visual point between the left-eye video signal and the right-eye video signal; a depth information calculator which calculates first depth information of the 3D video signal based on the calculated disparity information and photographs information from a 3D image photographing device that generates the 3D video signal; a 3D image converter which generates a first depth map based on the first depth information and display the first depth map on the display unit; and a user interface (UI) generator which generates and displays a menu button for user adjustment of the first depth information, the 3D image converter generating a second depth map based on second depth information in response to a user's selection input through the menu button and displaying the second depth on the display unit.

The 3D image converter may convert the 3D video signal into a first 3D image based on the first depth map, and may convert the 3D video signal into a second 3D image based on the second depth map, and displays the first and second 3D images on the display unit.

The display apparatus may further include a user input unit; and a controller which controls the display unit to display at least one of the first 3D image and the second 3D image in response to a user's selection.

The depth information calculator may calculate a predetermined range selectable by a user based on the first depth information.

The menu button may include a menu for selecting a region of which the first depth information is adjusted, and a menu for adjusting a depth value of the selected area, and the menu for adjusting the depth value may reflect a predetermined range for a user's selection, calculated by the depth information calculator.

A region of the second 3D image, not selected by the menu for selecting the region, may be processed by blurring or with a predetermined color.

The photographing information of the 3D image photographing device may include at least one of baseline distance information of a visual point of a 3D camera that generates the 3D video signal, and focal distance information of the 3D camera.

According to another aspect of an exemplary embodiment, there is provided a method of adjusting a three-dimensional (3D) effect of a display apparatus, the method including: receiving a 3D video signal including a left-eye video signal and a right-eye video signal; calculating disparity information showing the difference in a visual point between the left-eye video signal and the right-eye video signal; calculating first depth information of the 3D video signal based on the calculated disparity information and photographing information from a 3D image photographing device that generates the 3D video signal; generating and displaying a first depth map based on the first depth information; generating and displaying a menu button for adjusting the first depth information; and generating and displaying a second depth map based on second depth information, in response to a user's selection input through the menu button.

The method may further include: converting and displaying the 3D video signal into a first 3D image based on the first depth map; and converting and displaying the 3D video signal into a second 3D image based on the second depth map.

The method may further include: receiving a user's selection of selecting at least one of the first 3D image and the second 3D image; and displaying the selected image in response to the user's selection.

The calculating of the depth information may include calculating a predetermined depth range selectable by a user, based on the first depth information.

The menu button may include a menu for selecting a region of which the first depth information is adjusted, and a menu for adjusting a depth value of the selected area, and the menu for adjusting the depth value reflects a predetermined range for a user's selection, calculated by the depth information calculator.

A region of the second 3D image, not selected by the menu for selecting the region, may be processed by blurring or with a predetermined color.

The photographing information of the 3D image photographing device may include at least one of baseline distance information of a visual point of a 3D camera that generates the 3D video signal, and focal distance information of the 3D camera. The above and/or other aspects will become apparent and more readily appreciated from the following description of exemplary embodiments, taken in conjunction with the accompanying drawings, in which:

> FIG. 1 is a control block diagram of a display apparatus according to an exemplary embodiment;
> FIG. 2 shows an exemplary embodiment of a disparity information calculator of the display apparatus of FIG. 1;
> FIG. 3 shows an exemplary embodiment of a 3D image converter of the display apparatus of FIG. 1; and
> FIG. 4 shows a control flowchart of the display apparatus of FIG. 1.

Below, exemplary embodiments will be described in detail with reference to the accompanying drawings so as to be easily understood by a person having ordinary skill in the art. The exemplary embodiments may be embodied in various forms without being limited to the exemplary embodiments set forth herein. Descriptions of well-known parts are omitted for clarity, and like reference numerals refer to like elements throughout.

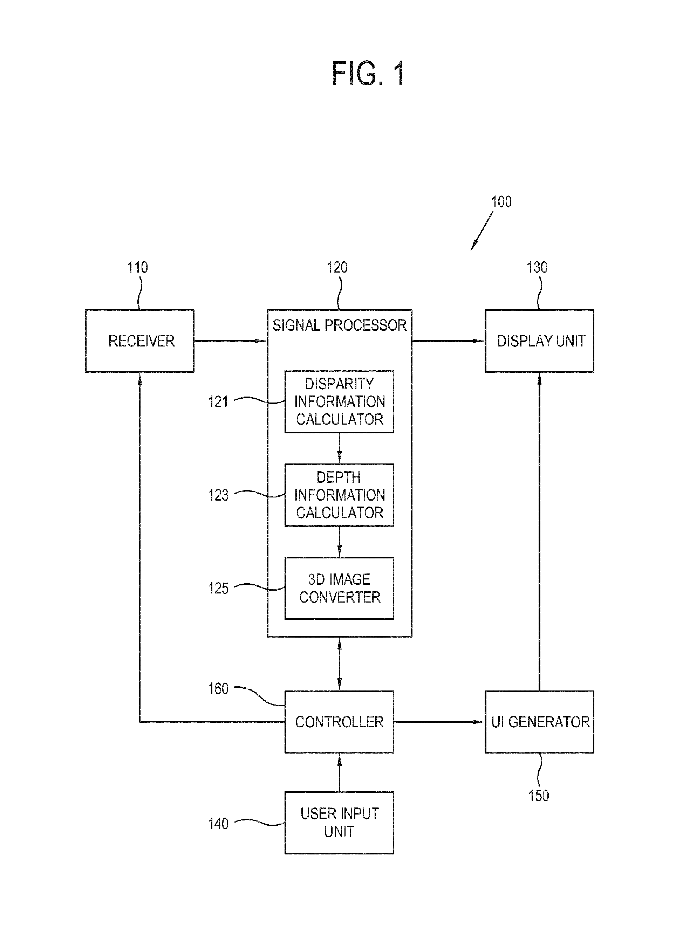

FIG. 1 is a control block diagram of a display apparatus according to an exemplary embodiment. Referring to FIG. 1, a display apparatus 100 includes a receiver 110, a signal processor 120, a display unit 130, a user input unit 140, a user interface (UI) generator 150, and a controller 160 which controls the other elements of Fig. 1.

The display apparatus 100 may calculate disparity information of a stereoscopic video signal (or a 3D video signal) received from a 3D image photographing device (not shown), and may calculate depth information based on the disparity information and photographing information from the 3D image-taking device. The display apparatus 100 may generate and display a depth map which corresponds to the calculated depth information. The depth map may be displayed along with a depth value assigned to an object or a predetermined region. Accordingly, a producer photographing the 3D image can ascertain whether a 3D effect is expressed which corresponds to his/her intention, through the displayed depth map. Also, the display apparatus 100 may generate and display a menu button for adjusting the depth information, and thus the depth value may be adjusted when the 3D effect is not expressed in a manner which corresponds with the intention of the producer. According to this exemplary embodiment, the display apparatus 100 can ascertain whether the 3D effect of the 3D image is expressed in a manner which corresponds to the intention of the producer, during the 3D image production, and also adjust the 3D effect.

In this exemplary embodiment, the display apparatus 100 may be implemented as a television or a monitor, which processes a video signal received from an external video source (not shown) in accordance with preset video processing and displays the processed video image as an image. If the display apparatus 100 is implemented as a TV, it may include an Internet protocol television (IPTV) using Internet protocol to receive a video signal and/or data, or may include a smart TV.

The receiver 110 transmits a video signal received from the external video source (not shown) to the signal processor 120, and may receive a broadcast signal from a broadcaster that provides a terrestrial broadcast, a satellite broadcast, a cable broadcast, a digital broadcast, or an IP broadcast. For example, the receiver 110 may include an antenna (not shown) and/or a tuner (not shown). Also, the receiver 110 may receive a video signal from the external video source (not shown). The receiver 210 may receive various types of formats which correspond to a format of the received video signal or the types of the video source (not shown) and the display apparatus 200. For example, the receiver 210 may receive a signal/data based on the format of high definition multimedia interface (HDMI), a universal serial bus (USB), a component or the like, and may include a plurality of connection terminals (not shown) which correspond to respective formats.

The receiver 110 may receive a 3D video signal (or a stereoscopic video signal) from the 3D image photographic device (not shown), and the 3D video signal includes a left-eye video signal for a user's left eye and a right-eye video signal for a user's right eye.

The signal processor 120 includes a disparity information calculator 121, a depth information calculator 123 and a 3D image converter 125.

The disparity information calculator 121 calculates disparity information showing the difference in a visual point between the left-eye video signal and the right-eye video signal, of the 3D video signal received from the receiver 110. Also, the disparity information calculator 121 can calculate disparity information showing the difference in a visual point between the left-eye video signal and the right-eye video signal, of an object contained in the 3D video signal.

To calculate the disparity information of the received 3D video signal, the disparity information calculator 121 may calculate the disparity information based on grayscale values according to regions of the 3D video signal, boundary information according to objects, object division information, etc. The disparity information calculator 121 may calculate the disparity information based on a known algorithm used in estimating the disparity information. The disparity information calculator 121 may calculate the disparity information according to predetermined regions, at least one object or pixel units of the 3D video signal, or may calculate the disparity information hierarchically by stepwise decreasing a calculation amount of the disparity information

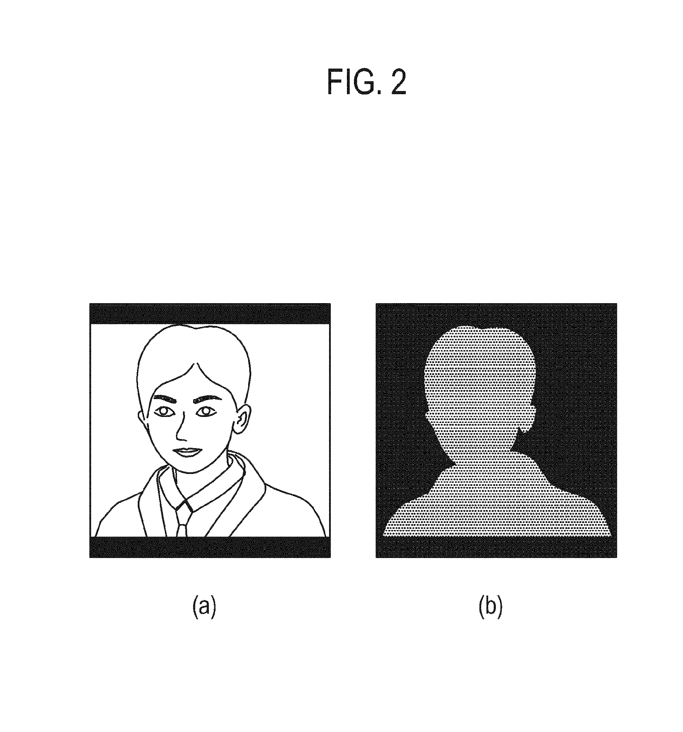

FIG. 2 shows an exemplary embodiment of a disparity information calculator of the display apparatus of FIG. 1. Referring to FIG. 2, (A) shows an image which corresponds to an input 3D video signal which has been received by the receiver 110. The disparity information calculator 121 calculates disparity information according to predetermined regions or objects of the input 3D video signal and generates a disparity image. (B) shows the disparity image on which the disparity information, calculated by the disparity information calculator 121, is reflected.

The depth information calculator 123 can calculate first depth information of the 3D video signal based on the disparity information calculated by the disparity information calculator 121 and photographing information from the 3D image photographing device which generates the 3D video signal.

The photographing information of the 3D image photographing information includes at least one of baseline distance information of a visual point of a 3D camera which generates the 3D video signal and focal distance information of the 3D camera. The 3D image photographing device (not shown) may include a 3D camera or a stereo camera, which can photograph a 3D image. The 3D image photographing device is a device that divisionally photographs a left-eye image and a right-eye image. Thus, the baseline distance information of the visual point of the 3D camera includes the distance between a lens for photographing the left-eye image and a lens for photographing the right-eye image. The focal distance information of the 3D camera includes the distance between a main focal point and the lens of the 3D camera.

The depth information calculator 123 can calculate first depth information z based on the disparity information d calculated by the disparity information calculator 121, the baseline distance information B of the visual point of the 3D camera, and the focal distance information f of the 3D camera by the following expression.

<Expression 1>

$$Z = \frac{B \times f}{d}$$

The first depth information Z calculated by the depth information calculator 123 indicates the actual depth information of the 3D video signal photographed by the 3D image photographing device. Therefore, the first depth information Z may or not comply with the intention of the producer. This is because the intention of a producer may be not always reflected directly when the 3D video signal is photographed using the 3D image photographing device.

As mentioned above, the disparity information calculator 121 can calculate the disparity information according to predetermined regions or to at least one object of the 3D video signal, and this disparity information is output to the depth information calculator 123. The depth information calculator 123 can calculate the depth value (i.e., first depth information) according to predetermined regions or at least one object of the 3D video signal based on the disparity information.

Also, the depth information calculator 123 can calculate a predetermined range for allowing a user to adjust the depth value based on the calculated first depth information.

The 3D image converter 125 can generate a first depth map (or depth image) based on the first depth information calculated by the depth information calculator 123, and display the first depth image on the display unit 130. The first depth map may show the depth values (depth information) as numerical values according to predetermined regions, or at least with respect to one object. Thus, a user (or 3D image producer) checks the generated first depth map and ascertains whether the 3D effect is expressed in a manner which complies with the intention of a user (or producer). As an ascertaining result, if the 3D effect based on the first depth map does not comply with the intention of a user (or producer), the UI generator 150 (to be described later) generates and display a menu button for adjusting the first depth information under the control of controller 160 when a certain key input is received through the user input unit 140 (to be described later).

The 3D image converter 125 generates a second depth map, of which depth value is adjusted according to an input selection of a user through the menu button, and displays the adjusted depth value on the display unit 130. A user or producer checks the second depth map and ascertains the 3D effect.

The 3D image converter 125 converts a 3D video signal into a first 3D image based on the first depth map, and converts the 3D video signal into a second 3D image based on the second depth map, thereby displaying at least one of the 3D images on the display unit 130.

The controller 160 allows at least one of the first 3D image and the second 3D image to be displayed on the display unit 130 in response to a user's selection through the user input unit 140 (to be described later). Accordingly, a user selects an image which complies with the intention of a user or a producer, while viewing the first 3D image of which depth information is not adjusted and the second 3D image of which depth information is adjusted.

The second 3D image may show a region of the input 3D image, not selected by a user through the menu button generated by the UI generator 150, as it is blurred or has a predetermined single color. Such settings regarding the non-selected region may be achieved as the UI generator 150 generates a separate menu button and the non-selected region is processed and displayed in accordance with a selection of a user, through the menu button. Therefore, in the case of the second 3D image, only the region to which the depth information is assigned is displayed with a 3D effect, and thus a user (or a producer) can intuitively verify whether the 3D effect is as intended.

The signal processor 120 may perform general video signal processing in addition to the foregoing 3D video signal processing. For example, the signal processor 120 may perform at least one of various types of video processing such as de-multiplexing for dividing signals according to characteristics, decoding based on formats of a video signal, de-interlacing for converting an interlace-type video signal into a progressive-type video signal, scaling for adjusting a video signal according to a preset resolution, noise reduction for improving image quality, detail enhancement, frame refresh rate conversion, etc.

Also, the signal processor 120 may further include an audio signal processor (not shown) capable of processing a audio signal in addition to the foregoing video processing, and thus the display apparatus 100 may further include a loudspeaker (not shown) for outputting sound which corresponds to an audio signal processed by the audio signal processor (not shown).

The display unit 130 may display an image which corresponds to a video signal output from the signal processor 120. The display unit 130 may include a display panel (not shown) and a panel driver (not shown) for driving the display panel. The display panel may be implemented by various types of displays such as liquid crystal, plasma, a light-emitting diode, an organic light-emitting diode, a surface-conduction electron-emitter, a carbon nano-tube, a nano crystal, etc.

The user input unit 140 transmits preset various control commands or unlimited information to the controller 160 in response to a user's manipulation or input. The user input unit 140 may be implemented as a menu-key or input panel installed outside the display apparatus 100, a remote controller separated from the display apparatus 100, etc. Also, the user input unit 140 may be integrated into the display unit 130. For example, if the display unit 130 is a touch screen, a user may give a preset command to the controller 160 through an input menu (not shown) displayed on the display unit 130.

The UI generator 150 generates the menu button for controlling the first depth information and outputs the menu button to the display unit 130 under control of the controller 160.

The menu button includes a menu for selecting a region of which the first depth information is adjusted, and a menu for adjusting the depth value of the selected region. The menu for adjusting the depth value reflects a predetermined range for a user's selection, calculated by the depth information calculator 123.

If the region selecting menu is selected, a predetermined region or a predetermined object on the 3D image is designated by a pointer device (not shown), thereby allowing a user to select a region where depth value information will be adjusted.

Also, if the depth-value adjusting menu is selected, a predetermined range based on the first depth information of the region selected through the menu for selecting the region is displayed in the form of a bar, a numeral, a range value input, etc., so that a user can select one of the depth values through the user input unit 140.

Also, the UI generator 150 may generate and display a setting menu for processing the non-selected region which has not been selected through the region selecting menu. The non-selected region processing setup menu may include a blurring menu and/or a certain color menu. Accordingly, the 3D image converter 125 can set up the processing of the non-selected region in response to a selection by a user input through the non-selected region processing setup menu.

The controller 160 controls operations of elements constituting the display apparatus 100. The controller 160 controls the operations in response to a selection by a user input through the user input unit 140.

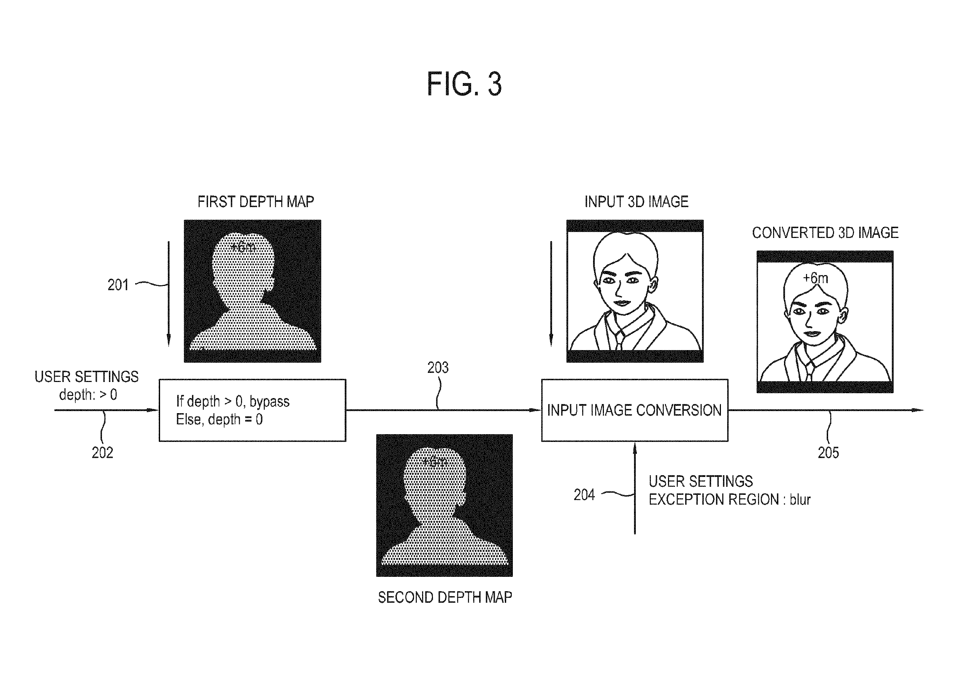

FIG. 3 shows an exemplary embodiment of a 3D image converter of the display apparatus of FIG. 1.

Referring to FIG. 3, if the first depth information is received through the depth information calculator 123, the 3D image converter 125 generates the first depth map based on the first depth information and displays the first depth may on the display unit 130 (201). The first depth map may include depth values which correspond to respective regions. If a certain key input is received through the user input unit 140, the controller 160 controls the UI generator 150 to generate and display the menu button for adjusting the first depth information, and thus a user can adjust the first depth information through the menu button. In this exemplary embodiment, if a user's input through the menu button is for bypassing, if the depth value of the first depth information is higher than 0 and otherwise adjusting the depth value into 0 (202), the 3D image converter 125 generates the second depth map by leaving the depth value of the region of which depth value is higher than 0 on the first depth map and adjusting into 0 the depth value equal to or lower than 0, and displays the depth value on the display unit 130 (203). Such a menu for adjusting the depth value may be achieved in various fashions. Alternatively, if a user selects only a predetermined object through the region selecting menu, the depth value assigned to the region, except the selected object, can be adjusted into "0."

Also, the 3D effect converter 125 converts a 3D video signal received through the receiver 110 into a 3D image based on the second depth map, and displays it on the display unit 130.

If a certain key is input through the user input unit 140, the processing setup menu for a region to which a user does not assign a depth value is generated and displayed by the UI generator 150. Thus, a user can set up the region to which she/he does not assign the depth value to be processed by blurring or with a single color, through the processing setup menu (204)

The 3D image converter 125 converts the 3D video signal received through the receiver 110 into a 3D image based on the generated second depth map, in which the 3D image is processed by blurring or with a single color with regard to the region to which the depth value is not assigned, thereby displaying the 3D image on the display unit 130 (205). Thus, a user (or producer) can intuitively ascertain whether the 3D effect of the corresponding object is proper. Also, according to the display apparatus 100 in this exemplary embodiment, it is possible to inspect and solve a problem that the 3D image does not comply with a producer's initial intention since the disparity information is changed by various artifacts such as signal distortion, X-talk, etc. while the display apparatus processes and displays the 3D image.

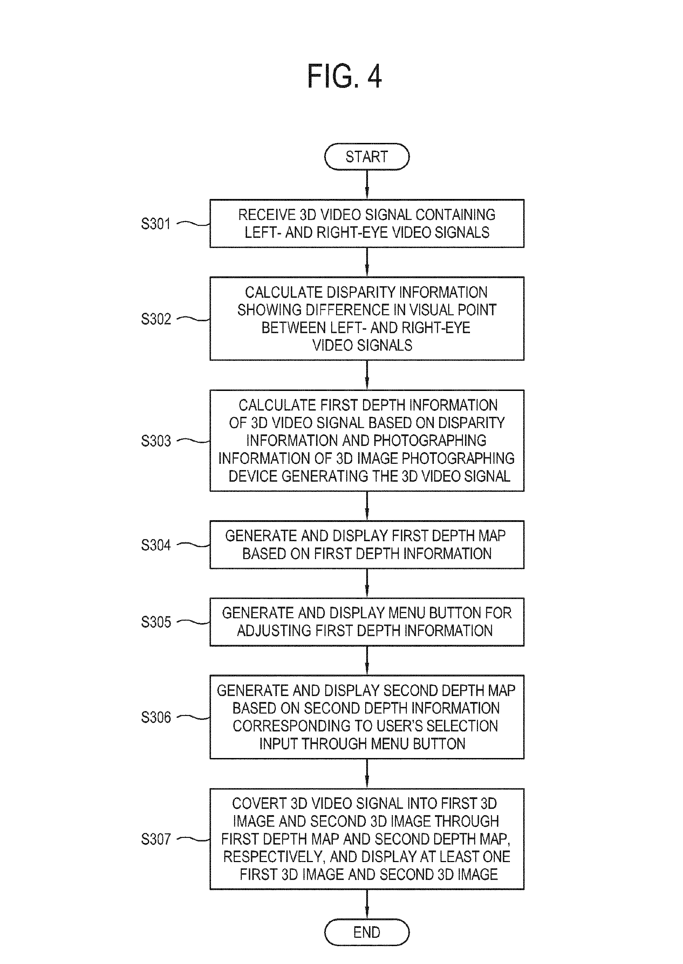

FIG. 4 shows a control flowchart of the display apparatus of FIG. 1.

Referring to FIG. 4, the receiver 110 of the display apparatus 100 receives a 3D video signal containing a left-eye video signal and a right-eye video signal (S301). The disparity information calculator 121 of the signal processor 120 calculates disparity information showing the difference in the visual point between the left-eye video signal and the right-eye video signal, and outputs it to the depth information calculator (S302). The depth information calculator 123 calculates the first depth information of the 3D video signal based on the disparity information and photographing information of the 3D image photographing device generating the 3D video signal, and outputs the depth information to the 3D image converter 125 (S303). The 3D image converter 125 generates the first depth map based on the first depth information and displays the first depth map on the display unit 130 (S304). If a certain key input is received through the user input unit 140, the controller 160 controls the UI generator 150 to generate the menu button for adjusting the first depth information and displays on the menu button on the display unit 130 (S305). If a user's selection is input through the menu button, the 3D image converter 125 generates the second depth map based on the second depth information of which depth information is adjusted in response to a selection by a user (S306). The 3D image converter 125 converts the 3D video signal into the first 3D image based on the first depth map, converts the 3D video signal into the second 3D image based on the second depth map, and displays at least one of the first 3D image and the second 3D image on the display unit 130 in response to a selection by a user (S307).

As described above, according to an exemplary embodiment, there are provided a display apparatus and a method of adjusting a 3D effect of the display apparatus, in which it is ascertained whether a 3D effect is expressed which complies with the intention of a 3D image producer; thus, the 3D effect is adjusted.

Although a few exemplary embodiments have been shown and described, it will be appreciated by those skilled in the art that changes may be made in these exemplary embodiments without departing from the principles of the invention, the scope of which is defined in the appended claims and their equivalents.

**Claims**

1. A display apparatus comprising:

   a display;
   a receiver arranged to receive a three-dimensional (3D) video signal including a left-eye video signal and a right-eye video signal;
   a disparity information calculator arranged to calculate disparity information showing a difference in a visual point between the left-eye video signal and the right-eye video signal;
   a depth information calculator arranged to calculate first depth information of the 3D video signal based on the calculated disparity information and photographing information of a 3D image photographing device that generates the 3D video signal;
   a 3D image converter arranged to generate a first depth map based on the first depth information and displays the first depth map on the display; and
   a user interface (UI) generator arranged to generate and display a menu button for adjusting the first depth information, the 3D image converter being arranged to generate a second depth map based on second depth information in response to a user's input selection through the menu button and displaying the second depth on the display.

2. The display apparatus according to claim 1, wherein the 3D image converter is arranged to convert the 3D video signal into a first 3D image based on the first depth map, and to convert the 3D video signal into a second 3D image based on the second depth map and displays the first and second 3D images on the display.

3. The display apparatus according to claim 2, further comprising:

   a user input device; and

a controller arranged to control the display to display at least one of the first 3D image and the second 3D image in response to a selection by a user.

4. The display apparatus according to claim 3, wherein the depth information calculator is arranged to calculate a predetermined range selectable by a user based on the first depth information.

5. The display apparatus according to any one of claims 2 to 4, wherein the menu button comprises a menu for selecting a region of which the first depth information is adjusted, and a menu for adjusting a depth value of the selected area, and the menu for adjusting the depth value reflects a predetermined range for a selection by a user, calculated by the depth information calculator.

6. The display apparatus according to claim 5, wherein a region of the second 3D image, not selected by the menu for selecting the region, is processed by blurring or with a predetermined color.

7. The display apparatus according to any one of claims 1 to 6, wherein the photographing information of the 3D image photographing device comprises at least one of baseline distance information of a visual point of a 3D camera that generates the 3D video signal, and focal distance information of the 3D camera.

8. A method of adjusting a three-dimensional (3D) effect of a display apparatus, the method comprising:

receiving a 3D video signal comprising a left-eye video signal and a right-eye video signal;
calculating disparity information showing a difference in a visual point between the left-eye video signal and the right-eye video signal;
calculating first depth information of the 3D video signal based on the calculated disparity information and photographing information received from a 3D image photographing device that generates the 3D video signal;
generating and displaying a first depth map based on the first depth information;
generating and displaying a menu button for adjusting the first depth information; and
generating and displaying a second depth map based on second depth information in response to a selection input by a user through the menu button.

9. The method according to claim 8, further comprising:

converting and displaying the 3D video signal into a first 3D image based on the first depth map; and

converting and displaying the 3D video signal into a second 3D image based on the second depth map.

10. The method according to claim 9, further comprising:

receiving a user's selection of at least one of the first 3D image and the second 3D image; and displaying the selected 3D image in response to the selection by the user.

11. The method according to claim 10, wherein the calculating the depth information comprises calculating a predetermined depth range selectable by a user based on the first depth information.

12. The method according to claim 11, wherein the menu button comprises a menu for selecting a region of which the first depth information is adjusted, and a menu for adjusting a depth value of the selected area, and the menu for adjusting the depth value reflects a predetermined range for selection by a user, calculated by the depth information calculator.

13. The method according to claim 12, wherein a region of the second 3D image, not selected by the menu for selecting the region, is processed by blurring or with a predetermined color.

14. The method according to any one of claims 8 to 13, wherein the photographing information received from the 3D image photographing device comprises at least one of baseline distance information of a visual point of a 3D camera that generates the 3D video signal, and focal distance information of the 3D camera.

# FIG. 1

100

110

RECEIVER

120

SIGNAL PROCESSOR

130

DISPLAY UNIT

121

DISPARITY
INFORMATION
CALCULATOR

123

DEPTH
INFORMATION
CALCULATOR

125

3D IMAGE
CONVERTER

160

CONTROLLER

150

UI GENERATOR

140

USER INPUT
UNIT

# FIG. 2

(a)                                                    (b)

# FIG. 3

FIRST DEPTH MAP

INPUT 3D IMAGE

CONVERTED 3D IMAGE

201

USER SETTINGS
depth: > 0

202

| If depth > 0, bypass Else, depth = 0 |

203

INPUT IMAGE CONVERSION

205

204

USER SETTINGS
EXCEPTION REGION : blur

SECOND DEPTH MAP

# FIG. 4

START

S301 — RECEIVE 3D VIDEO SIGNAL CONTAINING LEFT- AND RIGHT-EYE VIDEO SIGNALS

S302 — CALCULATE DISPARITY INFORMATION SHOWING DIFFERENCE IN VISUAL POINT BETWEEN LEFT- AND RIGHT-EYE VIDEO SIGNALS

S303 — CALCULATE FIRST DEPTH INFORMATION OF 3D VIDEO SIGNAL BASED ON DISPARITY INFORMATION AND PHOTOGRAPHING INFORMATION OF 3D IMAGE PHOTOGRAPHING DEVICE GENERATING THE 3D VIDEO SIGNAL

S304 — GENERATE AND DISPLAY FIRST DEPTH MAP BASED ON FIRST DEPTH INFORMATION

S305 — GENERATE AND DISPLAY MENU BUTTON FOR ADJUSTING FIRST DEPTH INFORMATION

S306 — GENERATE AND DISPLAY SECOND DEPTH MAP BASED ON SECOND DEPTH INFORMATION CORRESPONDING TO USER'S SELECTION INPUT THROUGH MENU BUTTON

S307 — COVERT 3D VIDEO SIGNAL INTO FIRST 3D IMAGE AND SECOND 3D IMAGE THROUGH FIRST DEPTH MAP AND SECOND DEPTH MAP, RESPECTIVELY, AND DISPLAY AT LEAST ONE FIRST 3D IMAGE AND SECOND 3D IMAGE

END